# EUROPÄISCHE PATENTSCHRIFT

(11) **EP 1 279 216 B1**
(45) Veröffentlichungstag und Bekanntmachung des Hinweises auf die Patenterteilung: **19.04.2006**
(21) Anmeldenummer: 01942978.6
(22) Anmeldetag: 20.04.2001
(51) Int. Cl.: H02K 11/04, H02K 5/22, E05F 15/16

(54) **ELEKTROMECHANISCHE ANTRIEBSVORRICHTUNG**
ELECTROMECHANICAL DRIVE DEVICE
DISPOSITIF D'ENTRAINEMENT ELECTROMECANIQUE

(30) Priorität: 22.04.2000 DE 10020017
(43) Veröffentlichungstag der Anmeldung: 29.01.2003
(73) Patentinhaber: Brose Fahrzeugteile GmbH & Co. KG, Coburg, 96450 Coburg (DE)
(72) Erfinder: AAB, Volker, 96145 Sesslach-Heiligersdorf (DE); ROSENTHAL, Karl-Heinz, 96148 Baunach (DE); KURZENDÖRFER, Reiner, 96190 Untermerzbach (DE); BECKER, Herbert, 96450 Coburg (DE); SCHELHORN, Gerhard, 96450 Coburg (DE)
(74) Vertreter: Ninnemann, Detlef
(86) Internationale Anmeldenummer: PCT/DE2001/001598
(87) Internationale Veröffentlichungsnummer: WO 2001/082452

(56) Entgegenhaltungen:
- DE-C- 19 839 333

## Beschreibung

Die Erfindung betrifft ein Verfahren zur Herstellung einer elektromechanischen Antriebsvorrichtung für Verstelleinrichtungen eines Kraftfahrzeugs, insbsondere für einen Fensterheber, nach dem Oberbegriff des Patentanspruchs 1.

Zum Heben und Senken von Fensterscheiben eines Kraftfahrzeugs sind elektromotorische Fensterheber bekannt, die zum Einbau in Türen von Kraftfahrzeugen geeignet sind und eine Antriebsvorrichtung in Form beispielsweise eines Elektromotors mit angeschlossenem Getriebe oder eines Getriebemotors aufweisen, der über eine Leitungsver bindung und einen Schalter an eine Kraftfahrzeugbatterie anschließbar ist.

Die in der Fahrzeugtür über den elektromotorischen Fensterheber hebbare oder absenkbare Fensterscheibe ist dabei an ihrer unteren Kante an einem Führungsschlitten befestigt, der entlang einer Profilschiene mittels beispielsweise einer geschlossenen Seilschleife auf- und abbewegbar ist. Die Seilschleife umschlingt eine Seiltrommel die über beispielsweise ein Schneckengetriebe von dem Elektromotor in einer kompakten Antriebsvorrichtung angetrieben wird, die neben dem Elektromotor und dem Schneckengetriebe die Seiltrommel aufweisen kann und an tragenden Tellen des inneren der Fahrzeugtür, beispielsweise einer Trägerplatte, ebenso wie die Profilschiene befestigt ist.

Alternativ hierzu kann die Antriebsvorrichtung zum Betätigen eines Kreuzarmfensterhebers oder anderen Verstelleinrichtungen des Kraftfahrzeugs, beispielsweise eine Längsverstellung eines Sitzes, verwendet werden.

Da unterschiedliche Kräfte zum Heben und Absenken der Fensterscheibe erforderlich sind, ist der Elektromotor mit einer Steuerungsvorrichtung, einer Steuer- und Regelschaltung, die mit einem Sensor eines Meßsystem zur Bestimmung der Drehzahl oder Position des Elektromotors verbunden. Mit einem Bedlenschalter wird vom Fahrzeugführer oder Fahrgast die Steuerungsvorrichtung zum Heben oder Absenken der Fensterscheibe angesteuert.

In der DE 198 39 33 C1 ist eine Antriebseinrichtung für Kraftfahrzeuge mit separaten Gehäusen für das Getriebe und die zugeordnete Steuerelektronik beschrieben. Nachteilig an dieser Antriebseinrichtung ist, dass der modulare Aufbau zusätzliche Montageschritte des Zusammensetzens der Gehäuse notwendig macht bzw. die Steckverbinder zwischen den Gehäusen zusätzlich gegen Feuchtigkeit abgedichtet werden müssen.

Aus der EP 0482 040 B1 ist eine elektromechanische Antriebsvorrichtung bekannt, in der eine konventionelle Platine mit Bauelementen für eine Steuer- und Regelelektronik in einem Teil des Getriebegehäuses angeordnet ist. Das Einschubmodul besteht aus der Platine, einer Seitenwand und einen an der Platine befestigten Stecker einer Steckverbindung. Das Einschubmodul wird mit Dichtungen versehen bis zu einem Anschlag in den Teil des Getriebegehäuses eingesetzt.

Nachteilig ist die Vielzahl der nötigen Montageschritte. Erstens muß der Steckerkragen der Steckverbindung mit Steckerkontakten komplettiert werden. Zweitens wird der Steckerkragen in der Seitenwand befestigt, und drittens werden die Steckerkontakte mit der Platine verlötet. Im vierten Montageschritt muß die Seitenwand mit einer umlaufenden Dichtung versehen werden und im fünften Schritt wird das Einschubmodul eingesetzt, zum Ringmagnet ausgerichtet und nachfolgend befestigt.

Der Erfindung liegt die Aufgabe zu Grunde, eine vereinfacht zu montierende elektromechanische Antriebsvorrichtung und ein Verfahren zur Herstellung der elektromechanischen Antriebsvorrichtung anzugeben, die gegen Schmutzpartikel und Flüssigkeiten, beispielsweise Feuchtigkeit abgedichtet ist.

Diese Aufgabe wird durch die elektromechanische Antriebsvorrichtung mit den Merkmalen des Patentanspruchs 9 und den Verfahren zur Herstellung der elektromechanischen Antriebsvorrichtung mit den Merkmalen des Patentanspruchs 1 und 7 gelöst. Vorteilhafte Weiterbildungen der Erfindung sind den Unteransprüchen zu entnehmen.

Demgemäß wird die Steuerungsvorrichtung in dem Getriebegehäuse positioniert und die Steuerungsvorrichtung zur Positionierung durch eine Einschuböffnung des Getriebegehäuses eingeschoben. Anschließend wird der Steckerkragen in oder an der Einschuböffnung befestigt, wobei die Kontaktelemente in den Steckerkragen zur Komplettierung eingeführt werden.

Zum Einschieben wird die Steuerungsvorrichtung, beispielsweise ein Schaltungssubstrat, ein Leadframe oder ein Modulgehäuse der Steuerungsvorrichtung in Führungselementen des Getriebegehäuses geführt und in der vorbestimmten Position positioniert, beispielsweise in einer Verrastung eingerastet. So kann eine besonders schnelle, automatisierungsfähige Montage der Steuerungsvorrichtung erzielt werden.

Der Steckerkragen besteht mindestens aus einem Isolationsmaterial, beispielsweise Kunststoff, das die einzelnen Kontaktelemente gegeneinander isoliert. Zusätzlich können andere Materialien, beispielsweise ein Metallmantel zur Schirmung von Signalleitungen, vorgesehen sein.

Alternativ zum Befestigen eines Steckerkragens werden die Kontaktelemente mit einer Vergußmasse vergossen, so daß die Einschuböffnung mit den Kontaktelementen und der Vergußmasse das antriebsvorrichtungsseitige Anschlußelement bilden.
Die Kontaktelemente innerhalb der Einschuböffnung werden durch die Vergußmasse einzeln oder im Verbund in ihrer Position fixiert. Keine zusätzlichen Elemente sind für das antriebsvorrichtungsseitige Anschlußelement notwendig. Vorteilhafterweise ist der Rand der Einschuböffnung mit Elementen für einen Formschluß mit dem leitungselementseitigem Anschlußelement ausgebildet, um die mechanische Stabilität der gesteckten Leitungsverbindung zu erhöhen.

Bei beiden erfindungsgemäßen Verfahren wird zur Positionierung der Steuerungsvorrichtung die Steuerungsvorrichtung in eine vorbestimmte Position bewegt. Die vorbestimmte Position wird beispielsweise durch eine Führung oder einen Anschlag festgelegt. Beispielsweise kann durch mögliche Fertigungstoleranzen verursachtes Spiel durch Federelemente ausgeglichen werden. Mit Steuerungsvorrichtung sind Kontaktelemente fest verbunden. Diese Kontaktelemente dienen zur Kontaktierung einer elektrischen und/oder optischen Leitungsverbindung, die die Antriebsvorrichtung mit anderen Funktionseinheiten, beispielsweise einem Türsteuergerät oder einer Kraftfahrzeugbatterie verbindet. Um Kontaktelemente mit der Steuerungsvorrichtung fest zu verbinden können beispielsweise metallische Kontaktelemente auf einer Platine der Steuerungsvorrichtung verlötet sein, oder die Steuerungsvorrichtung ist beispielsweise in einem Schaltungsgehäuse oder Leitungsrahmen, bekannt als sogenannter Leadframe, integriert und die Kontaktelemente sind in dem Leadframe durch einen Verguß fest verbunden. Zur Positionierung der Kontaktelemente im Steckerkragen eines antriebsvorrichtungsseitigen Anschlußelements der Leitungsverbindung werden die Kontaktelemente zu Öffnungen des Steckerkragens positioniert, indem sie mit der Steuerungsvorrichtung in die vorbestimmte Position bewegt werden. So wird gleichzeitig oder anschließend das antriebsvorrichtungsseitige Anschlußelement der Leitungsverbindung komplettiert. Die Positionierung kann beispielsweise mit entsprechenden Ausrichtungszeichen im Getriebegehäuse durch eine Maschine automatisiert werden.

Durch die erfindungsgemäße Lösung wird die Vielzahl der Montageschritte erheblich reduziert. Ein herkömmliches Steckerbauelement, dessen Dichtung gegenüber dem Getriebegehäuse und die mechanische Befestigung und elektrische Kontaktierung des herkömmlichen Steckerbauelements mit der Steuerungsvorrichtung entfallen.

Der Elektromotor weist beispielsweise eine mit dem Getriebe mechanisch verbundene Motorwelle, Spulen zur Erzeugung der Kommutation und Bürsten zur Bestromung der Spulen auf. Die Elemente des Elektromotors sind in einem Motorgehäuse angeordnet, so daß der Elektromotor sich als Funktionseinheit vorprüfen läßt. Zur Herstellung der elektromechanischen Antriebsvorrichtung wird das Gehäuse des Elektromotors an dem Getriebegehäuse befestigt.

In einer Ausgestaltung der Erfindung wird der Steckerkragen stoffschlüssig mit dem Getriebegehäuse verbunden, In dem beispielsweise der Steckerkragen mit dem Randbereich der Einschuböffnung ultraschallverschweißt wird oder der Steckerkragen mit dem Randbereich der Einschuböffnung mit einem Kleber verklebt wird. So kann vorteilhaft mit der stoffschlüssigen Befestigung gleichzeitig der Steckerkragen gegen das Getriebegehäuse gedichtet werden.

Zur Abdichtung des Steckerkragens gegen Schmutzpartikel und Flüssigkeiten wird in einer vorteilhaften Ausgestaltung der Erfindung im Bereich des Steckerkragens das Getriebegehäuse mittels einer Vergußmasse vergossen. Vergußmassen, welche beispielsweise für elektrische Module eingesetzt werden, ermöglichen einen Verguß unter geringen Drücken. So kann neben dem Steckerkragen auch die Steuerungsvorrichtung mit druckempfindlichen Bauelementen, beispielsweise ein Elektrolytkondensator, zur Abdichtung vergossen werden. Zusätzlich zur Abdichtung wird der Verguß vorteilhaft zur Befestigung des Steckerkragens oder zur mechanischen Dämpfung oder Befestigung der Steuerungsvorrichtung oder anderer Bauelemente verwendet.

Um die Vergußmasse auch zwischen dem Steckerkragen und der Steuerungsvorrichtung zu vergießen weist der Steckerkragen vorteilhafterweise zu den Öffnungen für die Steckerkontakte zusätzlich mindestens eine Vergußöffnung auf. In die Vergußöffnung wird eine Kanüle oder dergleichen für die Zeit des Vergusses temporär eingeführt, um eine gute Verteilung der flüssigen oder pastösen Vergußmasse im Bereich des Steckerkragens sicherzustellen.

In einer besonders einfachen Herstellungsweise werden die Kontaktelemente durch auf einem Bereich einer Platine angeordnete Leiterbahnen gebildet, deren Endbereiche von einer Vergußmasse zur späteren Kontaktierung nicht vergossen werden. Die auf der Platine kontaktierten Bauelemente werden dagegen vorteilhafterweise mit der Vergußmasse vergossen. Die Leiterbahnen werden für die unterschiedlichen Anforderungen entsprechend angepaßt. So werden Leiterbahnen für eine hohe Stromdichte durch eine Stanzgittertechnik hergestellt oder auf der Platine strukturierte Kupferbahnen, beispielsweise durch galvanische Abscheidung von Metallen im Querschnitt verbreitert. Signalleitungen werden für einen niedrigeren Kontaktwiderstand beispielsweise vergoldet.

Im Folgenden wird die Erfindung anhand von Ausführungsbeispielen bezugnehmend auf zeichnerische Darstellungen näher erläutert.

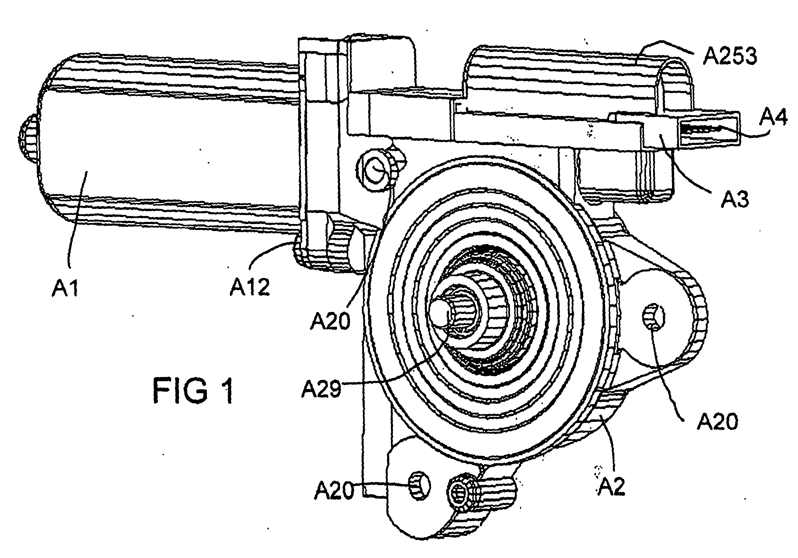

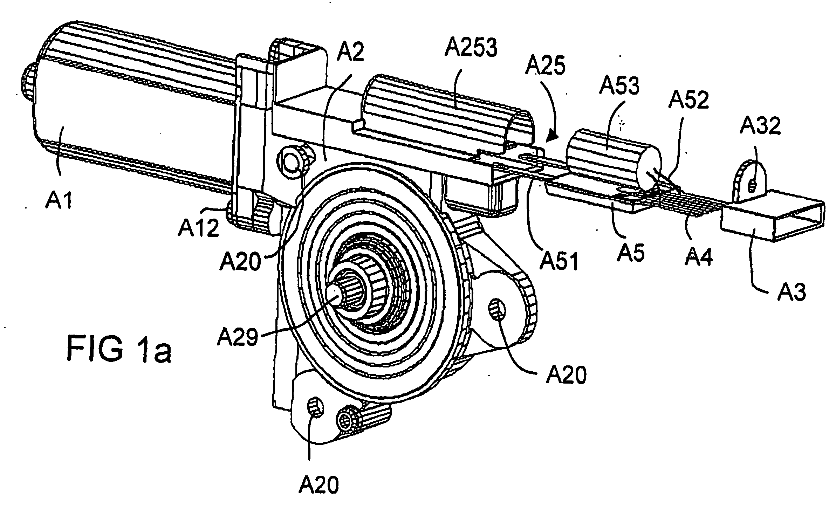

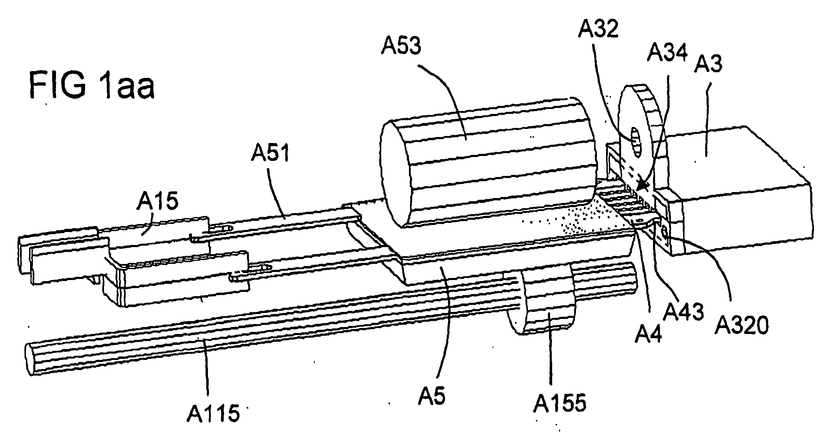

Dabei zeigen
- FIG 1: eine elektromechanische Antriebsvorrichtung,
- FIG 1a: eine Explosionsansicht einer Steuerungsvorrichtung und eines antriebsvorrichtungsseltigen Anschlusselementes und
- FIG 1aa: eine Detallansicht der Explosionsansicht.

In FIG 1 ist ein Ausführungsbeispiel einer elektromechanischen Antriebsvorrichtung eines Fensterhebers dargestellt. Ein Elektromotor A1, hier beispielsweise ein Kommutatormotor A1, ist mit einem Getriebe mechanisch verbunden. Das Gehäuse des Elektromotors A1 ist mit dem Getriebegehäuse A2 durch eine Verschraubung A12 des Elektromotors A1 mit dem Getriebegehäuse A2 befestigt. Das Getriebegehäuse A2 ist in diesem Ausführungsbeispiel ein Kunststoffspritzgußgehäuse, alternativ ist auch ein metallisches Gehäuse denkbar. Das Getriebegehäuse A2 weist mehrere Verschraubungspunkte A20 auf, durch deren Öffnung das Getriebegehäuse A2 an einer, in FIG 1 nicht dargestellten, Trägerplatte angeschraubt wird. Durch eine Öffnung der Trägerplatte wird ein Abtriebsritzel A29 geführt, auf dem eine, in FIG 1 ebenfalls nicht dargestellte, Seiltrommel befestigt ist, über die ein Seil eines Fensterhebers angetrieben wird. Innerhalb des Getriebegehäuses A2 ist ein Getriebe, in FIG 1 nicht dargestellt, angeordnet. Das Getriebe besteht beispielsweise aus einer mit der Achse des Elektromotors A1 verbundenen Schnecke, die ein mit dem Abtriebsritzel A29 verbundenes Schneckenrad antreibt.

Zur Steuerung des Elektromotors A1 ist im Getriebegehäuse A2 eine Steuerungsvorrichtung A5 (beispielsweise in FIG 1a dargestellt) integriert. Die Steuerungsvorrichtung A5 ist Ober ein antriebsvorrichtungsseitiges Anschlußelement einer Leitungsverbindung mit weiteren (nicht dargestellten) Funktionseinheiten des Kraftfahrzeugs, beispielsweise einem Türsteuergerät oder einer Batterie, elektrisch oder optisch verbunden. Das antriebsvorrichtungsseitige Anschlußelement weist zumindest einen Steckerkragen A3 und Kontaktelemente A4 auf. Die Kontaktelemente A4 sind innerhalb des Steckerkragens A3 angeordnet. Die Kontaktelemente A4 sind in diesem Ausführungsbeispiel Kontaktstifte A4, es können als Kontaktelemente A4 jedoch alle hierzu geeigneten Ausführungsformen von Kontaktelementen A4, beispielsweise Kontaktfedern verwendet werden.

Der Steckerkragen A3 dient unter anderem der mechanischen Stabilität der Steckverbindung zwischen dem antriebsvorrichtungsseitigen Anschlußelement und dem leitungselementseitigen Anschlußelement (in FIG 1 nicht dargestellt). Beispielsweise ist der Steckerkragen A3 mit dem Getriebegehäuse A2 einstückig ausgebildet, indem das Getriebegehäuse A2 mit dem Steckerkragen A3 spritzgegossen ist. In das Spritzgußwerkzeug werden die Kontaktelemente A4, in FIG 1 dargestellt als Kontaktstifte A4, eingelegt und vom Kunststoff des Steckerkragens A3 umspritzt.

Elektrolytkondensatoren A53, beispielsweise in FIG 1a dargestellt, und gegenüber Druck empfindliche Bauelemente können nicht In das Getriebegehäuse A2 mit eingespritzt werden. Diese werden in FIG 1 in einem separaten Getriebegehausetell A253 angeordnet. Das Gehäuse A253 des Elektrolytkondensators A53 wird nach der Kontaktierung des Elektrolytkondensators A53 an dem Getriebegehäuse A2 stoffschlüssig befestigt. Das Gehäuse A253 des Elektrolytkondensators A53 ist gleichzeitig in Doppelfunktion ein Kühlkörper zur Ableitung von Verlustwärme der Steuerungsvorrichtung A5 und hierzu mit der Steuerungsvorrichtung A5 thermisch gekoppelt.

In FIG 1a ist ein Teil der elektromechanischen Antriebsvorrichtung in einer Explosionsansicht dargestellt. In diesem Fall ist das Gehäuse A253 des Elektrolytkondensators A53 einstückig an das Getriebegehäuse A2 angespritzt. Der Elektrolytkondensator A53 wird mit der Steuerungsvorrichtung A5 durch die Anschlußelemente A52 elektrisch verbunden und mit der Steuerungsvorrichtung A5 sowie mit derselben fest verbundene Kontaktstifte A4 in die Einschuböffnung A25 zur Positionierung eingeschoben. Die Motorkontakte A51 der Steuerungsvorrichtung A5 werden mit dem Elektromotor A1 mit der Positionierung kontaktiert. Nach dem Einschieben sind die Kontaktstifte A4 innerhalb der Einschuböffnung A25 justiert. Die Justage erfolgt beispielsweise durch, in FIG 1a nicht dargestellte Führungselemente im Getriebegehäuse A2. Anschließend wird der Steckerkragen A3 in die Einschuböffnung A25 zumindest teilweise eingeschoben, wobei die Kontaktstifte A4 durch Öffnungen (A34, FIG 1aa) geführt werden. Der Steckerkragen A3 weist Vergußöffnungen A32 auf, in die eine nicht dargestellte Kanüle mit einer Vergußmasse eingeführt wird.

In FIG 1aa ist eine Detailansicht der Explosionsansicht dargestellt. Zur Steuerungsvorrichtung A5 positioniert ist auf einer Schneckenwelle A115 ein Hallmagnet A155 angeordnet. Die Schnecke ist in FIG 1aa nicht dargestellt. In der Steuerungsvorrichtung A5 sind zwei Hallsensoren integriert, die die Bewegung oder Position einer Fensterscheibe über die Drehung des Hallmagneten A155 bestimmen. Die Steuerungsvorrichtung A5 wird mit den Anschlüssen A15 des Elektromotors A1 durch die Motorkontakte A51 kontaktiert. Hierzu sind die Enden der Motorkontakte A51 als Klemmkontakte ausgeführt.

Wird der Steckerkragen A3 in die Einschuböffnung A25 geschoben, werden die positionierten Kontaktstifte A4 in die zugehörigen Öffnungen A34 des Steckerkragens A3 eingeführt. Mit Verrastungselementen A43 werden die Kontaktstifte A4 im Steckerkragen A3 verrastet. Nicht genutzte Öffnungen A320 im Steckerkragen A3 können zusätzlich zum Vergießen der Kontaktstifte A4 mit einer Vergußmasse, in FIG 1 aa nicht dargestellt, dienen.

### Bezugszeichenliste

- A1: Elektromotor
- A3: Steckerkragen
- A4: Kontaktelemente
- A20: Verschraubungsöffnung, Verschraubungspunkt
- A2: Getriebegehäuse
- A29: Abtriebsritzel, Abtriebselement
- A235: Gehäuse des Elektrolytkondensators
- A12: Motorverschraubung
- A51: Motorkontakte
- A53: Elektrolytkondensator
- A5: Steuerungsvorrichtung
- A52: Anschlußelemente des Elektrolytkondensators
- A32, A320: Vergußöffnung
- A15: Motoranschlüsse
- A115: Schneckenwelle
- A155: Hallmagnet
- A43: Verrastungselemente
- A34: Steckerkragenöffnung
- A25: Einschuböffnung

## Patentansprüche

1. Verfahren zur Herstellung einer elektromechanischen Antriebsvorrichtung für Verstelleinrichtungen in Kraftfahrzeugen, insbesondere für einen Fensterheber, indem
- ein Getriebe in einem Getriebegehäuse (A2,B2,B2') angeordnet wird,
- ein Elektromotor (A1,B1) mit dem Getriebe mechanisch verbunden wird und
- eine Steuerungsvorrichtung (A5,B5,B5') zum Steuern des Elektromotors (A1,B1) positioniert wird,
wobei gleichzeitig mit der Positionierung der Steuerungsvorrichtung (A5,B5,B5') mit der Steuerungsvorrichtung (A5,B5,B5') fest verbundene Kontaktelemente (A4,B4,B4') zu einer oder mehreren Öffnungen (A34,B34') eines Steckerkragens (A3,B3,B3') positioniert werden, um ein antriebsvorrichtungsseitiges Anschlußelement (A4,B4,B4',A3,B3,B3') einer Leitungsverbindung zu komplettieren,
**dadurch gekennzeichnet,**
**daß** die Steuerungsvorrichtung (A5) in dem Getriebegehäuse (A2,B2,B2') positioniert wird und die Steuerungsvorrichtung (A5) zur Positionierung durch eine Einschuböffnung (A25) des Getriebegehäuses (A2) eingeschoben wird, und daß anschließend der Steckerkragen (A3) in oder an der Einschuböffnung (A25) befestigt wird, wobei die Kontaktelemente (A4) in den Steckerkragen (A3) zur Komplettierung eingeführt werden.

2. Verfahren nach Anspruch 1,
**dadurch gekennzeichnet,**
**daß** zur Befestigung des Steckerkragens (A3) der Steckerkragen (A3) stoffschlüssig, insbesondere durch
- Ultraschallverschweißen des Steckerkragens (A3) mit dem Randbereich der Einschuböffnung (A25), oder
- Verkleben des Steckerkragens (A3) mit dem Randbereich der Einschuböffnung (A25),
mit dem Getriebegehäuse (A2) verbunden wird.

3. Verfahren nach Anspruch 1,
**dadurch gekennzeichnet,**
**daß** zur Befestigung des Steckerkragens (A3) der Steckerkragen (A3) formschlüssig, insbesondere durch
- Einclipsen des Steckerkragens (A3) der Steckerkragen (A3) in die Einschuböffnung (A25),
mit dem Getriebegehäuse (A2) verbunden wird.

4. Verfahren nach einem der Ansprüche 1 bis 3,
**dadurch gekennzeichnet,**
**daß** durch das Einschieben der Steuerungsvorrichtung (A5) die Steuerungsvorrichtung (A5) mit dem Elektromotor (A1) durch das Kontaktieren von Motorkontakten (A51) elektrisch verbunden wird.

5. Verfahren nach einem der vorhergehenden Ansprüche,
**dadurch gekennzeichnet,**
**daß** im Bereich des Steckerkragens (A3,B3,B3') das Getriebegehäuse (A2,B2,B2') mittels einer Vergußmasse (B60') vergossen wird.

6. Verfahren nach Anspruch 5,
**dadurch gekennzeichnet,**
**daß** eine flüssige oder pastöse Vergußmasse (B60') durch eine zusätzliche Vergußöffnung (A32,A320).des Steckerkragens (A3,B3,B3') durch eine Kanüle oder dergleichen vergossen wird.

7. Verfahren zur Herstellung einer elektromechanischen Antriebsvorrichtung für Verstelleinrichtungen In Kraftfahrzeugen, Insbesondere für einen Fensterheber, indem
- ein Getriebe in einem Getriebegehäuse (A2,B2,B2') angeordnet wird,
- ein Elektromotor (A1,B1) mit dem Getriebe mechanisch verbunden wird und
- eine Steuerungsvorrichtung (A5,B5,B5') zum Steuern des Elektromotors (A1,B1) positioniert wird,
wobei gleichzeitig mit der Positionierung der Steuerungsvorrichtung (A5,B5,B5') mit der Steuerungsvorrichtung (A5,B5,B5') fest verbundene Kontaktelemente (A4,B4,B4') zu einer oder mehreren Öffnungen (A34,B34') eines Steckerkragens (A3,B3,B3') positioniert werden, um ein antriebsvorrichtungsseitiges Anschlußelement (A4,B4,B4',A3,B3,B3') einer Leitungsverbindung zu komplettieren,
**dadurch gekennzeichnet,**
**daß** die Steuerungsvorrichtung (A5) in dem Getriebegehäuse (A2,B2,B2') positioniert wird und die Steuerungsvorrichtung (A5) zur Positionierung durch eine Einschuböffnung (A25) des Getriebegehäuses (A2) eingeschoben wird, wobei die Kontaktelemente (A4) mit einer Vergußmasse (B60') vergossen werden, so daß die Einschuböffnung (A25) mit den Kontaktelementen (A4) und der Vergußmasse (B60') das antriebsvorrichtungsseitige Anschlußelement (A4,A3) bilden.

8. Verfahren nach einem der vorhergehenden Ansprüche,
**dadurch gekennzeichnet,**
**daß** die Kontaktelemente durch auf einem Bereich einer Platine angeordnete Leiterbahnen gebildet werden.

9. Elektromechanische Antriebsvorrichtung, hergestellt gemäß dem Verfahren nach den Ansprüchen 1 und 7,
**dadurch gekennzeichnet,**
**daß** der Steckerkragen (A3) als separates Teil am Getriebegehäuse (A2) befestigt ist.

10. Elektromechanische Antriebsvorrichtung nach Anspruch 9,
**gekennzeichnet durch**
eine im Bereich des Steckerkragens (A3) angeordnete Dichtung (B6',B60') zur Abdichtung der Einschuböffnung (A25) oder des Steckerkragens (A3), insbesondere gegen Flüssigkeiten oder Schmutzpartikel.

11. Elektromechanische Antriebsvorrichtung nach Anspruch 10,
**dadurch gekennzeichnet,**
**daß** die Dichtung (B60') durch eine im Bereich des Steckerkragens (A3) in die Einschuböffnung (A25) gegossene Vergußmasse (B60') gebildet ist.

12. Elektromechanische Antriebsvorrichtung nach Anspruch 10,
**dadurch gekennzeichnet,**
**daß** die Dichtung durch ein Dichtelement eines Gegensteckers gebildet ist.

## Claims

1. Method for manufacturing an electromechanical drive device for adjusters in motor vehicles, more particularly for a window lifter, in which
- a gearing is mounted in a gear housing (A2, B2, B2')
- an electric motor (A1, B1) is mechanically connected to the gearing and
- a control device (A5, B5, B5') is positioned for controlling the electric motor(A1, B1)
whereby at the same time as positioning the control device (A5, B5, B5') contact elements (A4, B4, B4') fixedly connected to the control device (A5, B5, B5') are positioned relative to one or more openings (A34, B34') of a plug collar (A3, B3, B3') in order to complete a terminal element (A4, B4,B4', A3,B3,B3') on the drive device side of the a lead connection
**characterised in that**
the control device (A5) is positioned in the gear housing (A2, B2, B2') and the control device (A5) for positioning is pushed through an insert opening (A25) in the gear housing (A2), and that then the plug collar (A3) is fixed in or on the insert opening (A25) whereby the contact elements (A4) are inserted in the plug collar (A3) for completion.

2. Method according to claim 1, **characterised in that** to fix the plug collar (A3) the plug collar (A3) is connected to the gear housing (A2) with material bonding, more particularly through
- ultrasound welding of the plug collar (A3) to the edge region of the insert opening (A25), or
- sticking the plug collar (A3) to the edge region of the insert opening (A25).

3. Method according to claim 1, **characterised in that** to fix the plug collar (A3) the plug collar (A) is connected to the gear housing (A2) through keyed engagement, more particularly through
- clipping the plug collar (A3) into the insert opening (A25).

4. Method according to one of claims 1 to 3, **characterised in that** by pushing in the control device (A5) the control device (A5) is connected electrically to the electric motor (A1) through contacting of the motor contacts (A51).

5. Method according to one of the preceding claims, **characterised in that** the gear housing (A2, B2, B2') is cast by means of a casting substance (M60') in the region of the plug collar (A3, B3,B3').

6. Method according to claim 5, **characterised in that** a liquid or paste casting mass (B60') is cast through an additional casting opening (A32, A320) of the plug collar (A3, B3, B3') through a cannula or the like.

7. Method for manufacturing an electromechanical drive device for adjusters in motor vehicles, more particularly for a window lifter, in which
- a gearing is mounted in a gear housing (A2, B2, B2')
- an electric motor (A1, B1) is mechanically connected to the gearing and
- a control device (A5, B5, B5') is positioned for controlling the electric motor(A1, B1)
whereby at the same time as positioning the control device (A5, B5, B5') contact elements (A4, B4, B4') fixedly connected to the control device (A5, B5, B5') are positioned relative to one or more openings (A34, B34') of a plug collar (A3, B3, B3') in order to complete a terminal element (A4, B4, B4', A3, B3, B3') on the drive device side of the lead connection
**characterised in that**
the control device (A5) is positioned in the gear housing (A2, B2, B2') and the control device (A5) for positioning is pushed through an insert opening (A25) in the gear housing (A2), whereby the contact elements (A4) are cast with a casting substance (B60') so that the insert opening (A25) together with the contact elements (A4) and the casting substance (B60') form the terminal element (A4,A3) on the drive device side.

8. Method according to one of the preceding claims, **characterised in that** the contact elements are formed by conductor paths mounted on an area of a circuit board..

9. Electromechanical drive device manufactured according to the method according to claims 1 and 7, **characterised in that** the plug collar (A3) is fixed as a separate part on the gear housing (A2).

10. Electromechanical drive device according to claim 9, **characterised by** a seal (B6', B60') mounted in the region of the plug collar (A3) for sealing the insert opening (A25) or the plug collar (A3), more particularly against fluids or dirt particles.

11. Electromechanical drive device according to claim 10, **characterised in that** the seal (B60') is formed by a casting substance (B60') cast into the insert opening (A25) in the region of the plug collar (A3).

12. Electromechanical drive device according to claim 10, **characterised in that** the seal is formed by a sealing element of a counter plug.

## Revendications

1. Procédé de fabrication d'un dispositif d'entraînement électromécanique pour des systèmes de réglage dans des véhicules automobiles, notamment pour un lève-vitre, dans lequel
- une transmission est disposée dans un boîtier de transmission (A2, B2, B2'),
- un moteur électrique (A1, B1) est relié mécaniquement à la transmission et
- un dispositif de commande (A5, B5, B5') est positionné pour commander le moteur électrique (A1, B1),
des éléments de contact (A4, B4, B4') fixement reliés au dispositif de commande (A5, B5, B5') étant positionnés par rapport à une ou plusieurs ouverture(s) (A34, B34') d'un collet enfichable (A3, B3, B3') en même temps que le positionnement du dispositif de commande (A5, B5, B5'), afin de compléter un élément de raccordement (A4, B4, B4', A3, B3, B3') côté dispositif d'entraînement d'une liaison câblée, **caractérisé en ce que**
le dispositif de commande (A5) est positionné dans le boîtier de transmission (A2, B2, B2') et le dispositif de commande (A5) destiné au positionnement est introduit à travers une ouverture d'introduction (A25) du boîtier de transmission (A2), et **en ce que** le collet enfichable (A3) est ensuite fixé dans ou sur l'ouverture d'introduction (A25), les éléments de contact (A4) étant introduits dans le collet enfichable (A3) pour compléter l'ensemble.

2. Procédé selon la revendication 1,
**caractérisé en ce que**
pour fixer le collet enfichable (A3), le collet enfichable (A3) est relié par adhésion par matière au boîtier de transmission (A2), notamment par
- soudage aux ultrasons du collet enfichable (A3) à la zone latérale de l'ouverture d'introduction (A25), ou
- collage du collet enfichable (A3) à la zone latérale de l'ouverture d'introduction (A25).

3. Procédé selon la revendication 1,
**caractérisé en ce que**
pour fixer le collet enfichable (A3), le collet enfichable (A3) est relié au boîtier de transmission (A2) par coopération de formes, notamment par
- clipsage du collet enfichable (A3) dans l'ouverture d'introduction (A25).

4. Procédé selon l'une quelconque des revendications 1 à 3,
**caractérisé en ce que**,
en introduisant le dispositif de commande (A5), le dispositif de commande (A5) est relié électriquement au moteur électrique (A1) par la mise en contact des contacts de moteur (A51).

5. Procédé selon l'une quelconque des revendications précédentes,
**caractérisé en ce que**
le boîtier de transmission (A2, B2, B2') est coulé dans la zone du collet enfichable (A3, B3, B3') au moyen d'une masse de remplissage (B60').

6. Procédé selon la revendication 5,
**caractérisé en ce**
**qu'**une masse de remplissage (B60') liquide ou pâteuse est coulée à travers une ouverture de coulée (A32, A320) additionnelle du collet enfichable (A3, B3, B3') par l'intermédiaire d'une canule ou similaire.

7. Procédé de fabrication d'un dispositif d'entraînement électromécanique pour des systèmes de réglage dans des véhicules automobiles, notamment pour un lève-vitre, dans lequel
- une transmission est disposée dans un boîtier de transmission (A2, B2, B2'),
- un moteur électrique (A1, B1) est relié mécaniquement à la transmission et
- un dispositif de commande (A5, B5, B5') est positionné pour commander le moteur électrique (A1, B1),
des éléments de contact (A4, B4, B4') fixement reliés au dispositif de commande (A5, B5, B5') étant positionnés par rapport à une ou plusieurs ouverture(s) (A34, B34') d'un collet enfichable (A3, B3, B3') en même temps que le positionnement du dispositif de commande (A5, B5, B5'), afin de compléter un élément de raccordement (A4, B4, B4', A3, B3, B3') côté dispositif d'entraînement d'une liaison câblée, **caractérisé en ce que**
le dispositif de commande (A5) est positionné dans le boîtier de transmission (A2, B2, B2') et le dispositif de commande (A5), pour le positionnement, est introduit à travers une ouverture d'introduction (A25) du boîtier de transmission (A2), les éléments de contact (A4) étant coulés avec une masse de remplissage (B60'), de sorte que l'ouverture d'introduction (A25) forme avec les éléments de contact (A4) et la masse de remplissage (B60') l'élément de raccordement (A4, A3) côté dispositif d'entraînement.

8. Procédé selon l'une quelconque des revendications précédentes,
**caractérisé en ce que**
les éléments de contact sont formés par des pistes conductives disposées sur une zone d'une platine.

9. Dispositif d'entraînement électromécanique, fabriqué selon le procédé selon l'une quelconque des revendications 1 et 7,
**caractérisé en ce que**
le collet enfichable (A3) est fixé au boîtier de transmission (A2) en tant que partie séparée.

10. Dispositif d'entraînement électromécanique selon la revendication 9,
**caractérisé par**
un joint (B6', B60') disposé dans la zone du collet enfichable (A3), destiné à étanchéifier l'ouverture d'introduction (A25) ou le collet enfichable (A3), notamment contre des liquides ou des particules d'impureté.

11. Dispositif d'entraînement électromécanique selon la revendication 10,
**caractérisé en ce que**
le joint (B60') est formé par une masse de remplissage (B60') coulée dans la zone du collet enfichable (A3) dans l'ouverture d'introduction (A25).

12. Dispositif d'entraînement électromécanique selon la revendication 10,
**caractérisé en ce que**
le joint est formé par un élément d'étanchéité d'une contrefiche.
